# EUROPÄISCHE PATENTSCHRIFT

(11) **EP 0 490 867 B1**
(45) Veröffentlichungstag und Bekanntmachung des Hinweises auf die Patenterteilung: **10.05.1995**
(21) Anmeldenummer: 91890262.8
(22) Anmeldetag: 04.11.1991
(51) Int. Cl.: G01B 11/10, G01B 11/04

(54) **Einrichtung zum Erfassen der Masse eines gegebenenfalls bewegten Gegenstandes**
Device to assess the dimensions of a possibly moving object
Dispositif pour prendre les mesures d'un objet susceptible de se mouvoir

(30) Priorität: 10.12.1990 AT 2497/90
(43) Veröffentlichungstag der Anmeldung: 17.06.1992
(73) Patentinhaber: GEC ALSTHOM T&D GESELLSCHAFT m.b.H., 4020 Linz (AT)
(72) Erfinder: Wögerbauer, Johann-Peter, A-4040 Linz (AT)
(74) Vertreter: Rossboth, Werner Heinz

(56) Entgegenhaltungen:
- EP-A- 0 240 396
- EP-A- 0 250 089
- DE-A- 2 019 290
- DE-A- 2 555 975
- DE-A- 2 729 576
- US-A- 3 761 182
- US-A- 3 953 128

## Beschreibung

Die Erfindung bezieht sich auf eine Einrichtung zum Erfassen der Maße eines gegebenenfalls bewegten Gegenstandes mit einer optoelektronischen Meßeinrichtung, welche in wenigstens einer quer zur Längsachse des Gegenstandes stehenden Meßebene angeordnete Sende- und Empfangs-Elemente sowie eine Auswerte-Einheit aufweist, wobei die Meßebene von einem Meßtor mit wenigstens zwei einen vorbestimmten Winkel einschließenden Meßbalken begrenzt wird und auf den der Meßebene zugewandten Seitenflächen der Meßbalken wenigstens je eine Reihe von Empfangs-Elementen angeordnet ist.

Aus der DE-A-2 555 975 ist eine Einrichtung zum Feststellen bzw. Überwachen der Maße eines gegebenenfalls bewegten Gegenstandes bekannt, bei der in zwei Ebenen, die einen Winkel von 90° einschließen, Zeilenkameras vorgesehen sind, welche anstatt eines Filmes eine Fläche mit Photo-Dioden-Zeilen zur Erzeugung des elektronischen Schattenbildes eines durch die Optik vor einem hellen Hintergrund gesehenen Gegenstandes besitzen.

Ein ähnliches Verfahren mit zwei Kameras, deren optische Achsen einen Winkel von 90° einschließen, ist aus der US-A-3 761 182 bekannt. Um Lageänderungen des zu vermessenden runden Drahtes, Stabes oder Rohres berücksichtigen zu können, ist bei diesem Verfahren jeder Kamera eine Korrektureinrichtung für das Meßsignal der anderen Kamera zugeordnet.

In der US-A-3 761 182 ist auch ein Beispiel beschrieben, bei dem ein Linsensystem das Bild des runden Meßgegenstandes vor einem hellen Hintergrund über die Spiegelfläche eines umlaufenden Polygonspiegels in die Kathodenebene eines Fotovervielfachers fokussiert. Aus der Dauer des Impulses am Ausgang des Fotovervielfachers wird der Durchmesser des Meßgegenstandes ermittelt.

Aus der EP-A-0 240 396 geht ein Verfahren zum Messen des Durchmessers einer bewegten Lichtleitfaser mit zwei maßfesten Optoelektronik-Systemen hervor, deren optische Achsen aufeinander senkrecht liegen und die Längsachse der Lichtleitfaser senkrecht schneiden. Jedes System weist eine lichtemittierende Diode und eine Vergrößerungsoptik zum Abbilden eines vergrößerten unscharfen Bildes der Lichtleitfaser auf einer Reihe von Photodetektoren auf.

Eine Vorrichtung zur Dimensionsmessung eines Objektes mit einer gemeinsamen Strahlungsquelle, die parallele Strahlen aussendet, und zwei optischen Köpfen, deren optische Achsen einen Winkel einschließen und die Längsachse des Meßobjektes schneiden, ist aus der EP-A-0 250 089 bekannt.

Nach dem Prinzip der periodischen Abtastung des Meßgegenstandes, bei dem zu einem bestimmten Zeitpunkt nie ein Gesamtbild des Meßgegenstandes erhalten wird, arbeitet die aus DE-A-2 729 576 bekannte Vorrichtung. Von Nachteil ist bei dieser Vorrichtung, daß mechanisch bewegte Lichtsender, Empfänger oder Spiegel erforderlich sind.

In der DE-A-2 019 290 ist ein Ausführungsbeispiel mit einem Fotoempfänger-Band beschrieben, dem eine möglichst parallele Lichtstrahlen aussendende Lichtquelle, beispielsweise ein in größerem Abstand angeordneter Scheinwerfer oder eine Lichtquelle, die im Brennpunkt eines Parabolspiegels sitzt, gegenüberliegt. Damit eine beliebig grosse Anzahl von Messungen längs eines in der Längsrichtung geförderten Holzstammes vorgenommen werden kann (um Fehlmessungen an z.B. Astkränzen zu vermeiden), wird die Lichtquelle in beliebig kurzen Zeitabständen geblitzt.

Es sind auch schon Einrichtungen bekannt geworden, bei denen innerhalb von Sende-balken je eine Reihe von Infrarot-Sende-Dioden in engen, konstanten Abständen angeordnet sind, wobei jeder dieser Reihen je eine in der Meßebene in einem festen Abstand mittig zum Sendebalken liegende Infrarot-Photo-Diode zugeordnet ist und die Infrarot-Sende-Dioden durch eine Auswerte-Einheit in kurzen konstanten Zeitabständen nacheinander von oben nach unten jeweils zusammen mit der zugeordneten Infrarot-Photo-Diode aktiviert werden.

Diese nach dem Prinzip der periodischen Abtastung arbeitende Einrichtung hat den Nachteil, daß die Einstellung der Infrarot-Sende-Dioden einen hohen Zeitaufwand erfordert und nur mit aufwendigen Hilfsmitteln, beispielweise einem Oszilloskop, möglich ist.

Die in den Infrarot-Photo-Dioden erzeugten Signale sind außerdem relativ schwach und bedürfen zur Weiterverarbeitung einer hohen Verstärkung, wodurch jedoch die Gefahr einer Drift bzw. Veränderung der Parameter als Funktion von Zeit und Temperatur, die das Meßergebnis verfälscht, gegeben ist.

Durch die in der Folge aufgezeigte erfindungsgemäße Ausführung wird eine Einrichtung der eingangs genannten Art bezweckt, bei welcher die vorangeführten Nachteile vermieden werden können und die auf wirtschaftliche Art die exakte Erfassung der Maße eines gegebenenfalls bewegten Gegenstandes mit eichfähiger Genauigkeit und hoher Zuverlässigkeit ermöglicht.

Dies wird dadurch erreicht, daß den Reihen von Empfangs-Elementen nur je ein einziges in der Meßebene in einem festen Abstand vom Meßbalken liegendes, periodisch aktivierbares Sende-Element für die Aussendung eines fächerförmigen, auf die Empfangs-Elemente ausgerichteten Lichtstrahles zugeordnet ist und jede Reihe der Empfangs-Elemente etwa einen Kreisbogen bildet, in dessem Mittelpunkt das zugeordnete Sende-Element angeordnet ist.

Auf Grund der Geometrie der Einrichtung wird auf rein optoelektronischem Wege eine exakte Erfassung der Maße des Gegenstandes erreicht. Zu einem bestimmten Zeitpunkt wird immer ein Gesamtbild des Meßgegenstandes erhalten, wodurch sich eine hohe Meßgenauigkeit und kontinuierliche Meßwertermittlung ergibt. Die Einstellung bzw. Justierung der Einrichtung ist praktisch auf die Ausrichtung der beiden fächerförmigen Lichtstrahlen beschränkt. Durch die Anordnung der Empfangs-Elemente entlang eines Kreisbogens kann die Zuverlässigkeit und die Fremdlichtunempflindlichkeit erhöht werden, weil die EmpfangsElemente jeweils Signale gleicher Stärke zur elektronischen Weiterverarbeitung liefern.

Eine besonders einfach justierbare und wartungsfreundliche Ausführung wird erreicht, wenn die beiden Sende-Elemente aus je einer Laserdioden-Einheit mit Laserdiode, Drei-Linsen-Kollimator, Strichoptik und multiflexibler Treiberelektronik bestehen.

Liefert die Laserdioden-Einheit einen sichtbaren fächerförmigen Laserstrahl mit einer Wellenlänge von etwa 670 nm, kann die Ausrichtung der Sende-Elemente auf einfachste Art visuell ohne zusätzliche Meßgeräte vorgenommen werden.

Bevorzugterweise bestehen die Empfangs-Elemente aus Phototransistoren und sind in wasserdichten Empfangsbalken mit einem im Bereich des fä-cherförmigen Lichtstrahles durchgehenden, von einem Glas abgedeckten Längsschlitz untergebracht.

Phototransistoren besitzen u.a. einen weiten Empfangswinkel. Es ist daher keine Fokussierung erforderlich und der Einsatz von maschinellen Leiterplattenbestückungsverfahren (SMD) möglich. Die geschützte Unterbringung in den Empfangsbalken verhindert äußere Einflüsse und Störungen durch Fremdlicht.

Eine besonders wirtschaftliche und wartungsfreundliche Ausbildung ergibt sich, wenn die Reihe der Empfangs-Elemente in gleiche Teilstücke unterteilt ist, wobei die Empfangs-Elemente jedes Teilstückes auf einer gleichförmigen Leiterplatte angeordnet sind.

Der modulartige Aufbau der Empfangs-Elemente-Reihen ermöglicht nicht nur eine Minimierung des Verdrahtungsaufwandes, sondern auch ein leichtes Auswechseln von Teilstücken mit verbrauchten Empfangs-Elementen.

Bevorzugterweise ist jedes Sende-Element in einem wasserdichten Gehäuse mit einem von einem Glas abgedeckten Schlitz zum zugeordneten Empfangsbalken hin angeordnet, wobei das Gehäuse zwischen zwei mit einem Steher des Meßtores fest verbundenen, rechteckigen Platten montiert ist, welche seitlich über das Gehäuse vorstehen.

Die Sende-Elemente sind dadurch ebenfalls gegen äußere Einflüsse geschützt, auf einfache Art montier- und auswechselbar und unfallsicher angeordnet.

Um die Einstellung der Einrichtung noch weiter zu erleichtern, können die beiden Sende-Elemente zum Justieren der Empfangsbalken für Dauerlicht aktivierbar sein.

Bevorzugterweise besteht die Auswerte-Einheit aus einem Mikroprozessorsystem mit Speichereinheit das die Sende- und Empfangs-Elemente synchron in einer Taktfrequenz von mehr als 300 Hz aktiviert.

Obwohl die Auswerte-Einheit aus handelsüblichen integrierten Schaltkreisen einfach zu verwirklichen ist, können Mikroprozessoren preisgünstiger zu erhalten und auch leichter anpaßbar sein. Durch die gewählte Taktfrequenz wird eine praktisch kontinuierliche Meßwerterfassung über die ganze Länge des Meßgegenstandes erzielt, auch wenn dieser mit einer Geschwindigkeit von mehr als 180 m/Minute in Richtung seiner Längsachse bewegt wird.

Bei einer weiteren Ausführung kann die Auswerte-Einheit zur Erfassung und Anzeige des Durchmessers und bzw. oder Volumens des Gegenstandes aus den gezählten Signalen von beiden Empfangs-Elemente-Reihen, den ermittelten Zahlen der vom Gegenstand abgedunkelten Empfangs-Elemente und der konstanten Länge der beiden Empfangs-Elemente-Reihen sowie den konstanten Abständen der Empfangs-Elemente-Reihen zu ihren zugeordneten Sende-Elementen und den beiden Sende-Elementen zueinander, unter Erzeugung eines die Distanz zwischen dem Gegenstand und den Sende-Elementen berücksichtigenden Lagesignals ausgebildet sein.

Mit Hilfe eines gespeicherten Algorithmusses kann die Auswerte-Einheit aus diesen Werten mathematisch das Maß, beispielsweise den Durchmesser eines Holzstammes, exakt errechnen. Vorzugsweise wird dem Algorithmus der Sinussatz zugrundegelegt.

In einer Ausführung kann die Auswerte-Einheit so ausgebildet sein, daß durch vom Gegenstand abstehende Teile verursachte Abdunkelungen von Empfangs-Elementen unterdrückt werden.

Durch diese beispielweise mittels einer in der Auswerte-Einheit programmierten Logik erhaltenen Unterdrückung können Verfälschungen des Meßergebnisses durch am Kettenförderer liegende Holz- oder Rindenstücke sowie vom Holzstamm abstehende Teile vermieden werden. Für die Durchmesserrechnung wird immer nur die Zahl der benachbarten, abgedunkelten Empfangs-Elemente der beiden Empfangsbalken berangezogen.

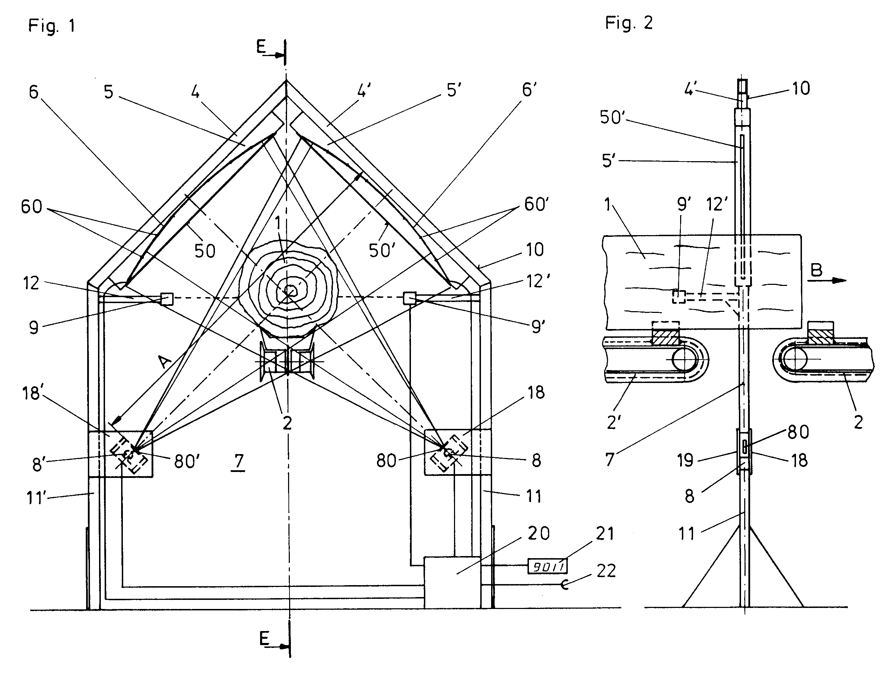

Im folgenden wird an Hand der beiliegenden Zeichnung ein Ausführungsbeispiel des Erfindungsgegenstandes näher erläutert. Es zeigen: Fig. 1 den Aufriß einer erfindungsgemäßen Einrichtung und Fig. 2 die Schnittdarstellung der Einrichtung gemäß der Linie E-E in Fig. 1.

In Fig. 1 ist schematisch ein Kettenförderer 2 dargestellt, auf welchem ein Holzstamm 1 in Richtung des Pfeiles B (Fig. 2) transportiert wird. Im Bereich der Meßebene 7 (Fig. 2) bzw. des Meßtores 10 ist der Kettenförderer 2 geteilt, um Beeinflussungen der Meßvorgänge zu vermeiden. Anstatt der Teilung des Kettenförderers 2, 2' (Fig. 2) könnte jedoch auch eine Umlenkrolle oder ein die Meßeinrichtung nicht behindernder Spalt in der Führung des Kettenförderers vorgesehen sein.

Zur Erfassung der Durchmesser bzw. des Volumens des Holzstammes 1 ist ein aus Stehern 11, 11' und Meßbalken 4,4' bestehendes Meßtor 10 vorhanden, durch welches der Holzstamm 1 fährt. Steher 11, 11' und Meßbalken 4, 4' bestehen aus Metallprofilen und sind fest miteinander verbunden. Die symmetrisch angeordneten Meßbalken 4, 4' schließen einen Winkel von 90° ein. Es können aber auch mehrere, beispielsweise drei einen Winkel von 60° einschließende Meßbalken, vorgesehen sein. Das Meßtor 10 ist senkrecht zu seiner Grundfläche aufgestellt und stabil verankert. Auf den der Meßebene 7 zugewandten Seitenflächen der Meßbalken 4, 4' ist je ein Empfangsbalken 5, 5' montiert. Die Empfangsbalken 5, 5' bestehen aus wasserdichten Gehäusen mit einem im Bereich der Meßebene 7 durchgehenden, von einem Glas abgedeckten Längsschlitz 50, 50'.

Im Inneren der Empfangsbalken 5, 5' ist etwa in einem Kreisbogen eine Reihe von Phototransistoren 6, 6' in engen, konstanten Abständen von etwa 3 mm angeordnet. Die Reihe der Phototransistoren 6, 6' ist aus gleichen Teilstücken 60, 60' mit je einer mit 64 Phototransistoren 6, 6' bestückten Leiterplatte aufgebaut.

Im Mittelpunkt des Kreisbogens der beiden Phototransistoren-Reihen 6, 6' befindet sich in einem festen Abstand A zu den Meßbalken 4, 4' je eine Laserdioden-Einheit 8, 8'.

Diese Laserdioden-Einheiten 8, 8' sind je in einem dichten Gehäuse mit einem von einem Glas abgedeckten Schlitz 80, 80' zum zugeordneten Empfangsbalken 5, 5' bzw. deren Längsschlitz 50, 50' hin angeordnet, wobei das Gehäuse zwischen zwei mit einem Steher 11, 11' des Meßtores 10 fest verbundenen, rechteckigen Platten 18, 19; 18', 19' montiert ist, die seitlich über das Gehäuse vorstehen. Die Platten 18, 19; 18', 19' sind an ihren dem Gehäuse zugewandten Flächen schwarz gefärbt, so daß Spiegelungen des Laserstrahls vermieden werden können.

An Auslegern 12, 12' des Meßtores 10 ist eine Infrarot-Lichtschranke 9, 9' montiert. Soferne der Holzstamm 1 diese Infrarot-Lichtschranke 9, 9' durchfährt, werden die Meßvorgänge ausgelöst. Aus der Dauer der Unterbrechung der Infrarot-Lichtschranke 9, 9' und der Geschwindigkeit des Kettenförderers 2, 2' ist außerdem die Länge des Holzstammes 1 exakt errechenbar. Eine Überwachung oder Aufnahme der Geschwindigkeit des Kettenförderers 2, 2' kann auf herkömmliche Art über einen gekoppelten Impulsgeber erfolgen.

Die Auswerte-Einheit 20 ist elektrisch mit den beiden Phototransistor-Reihen 6, 6' Laserdioden-Einheiten 8, 8' und der Infrarotlichtschranke 9, 9' verbunden, wie in Fig. 1 schematisch dargestellt ist.

An die Auswerte-Einheit 20 ist außerdem ein Flüssigkristalldisplay 21 zur digitalen Anzeige der Meßwerte angeschlossen. Eine serielle Schnittstelle 22 dient zur Weiterverarbeitung und Protokollierung der Meßwerte.

Aus Fig. 2 ist ersichtlich, daß der Holzstamm 1 gerade das Meßtor 10 bzw. die Meßebene 7 durchfährt und sich sein eines Ende gerade über dem geteilten Kettenförderer 2, 2' befindet. Nach dem Passieren der Lichtschranke 9, 9' wurden in der Auswerte-Einheit 20 die Meßvorgänge ausgelöst.

Nach dieser Auslösung und einer eingestellten Verzögerung für jene Zeit, die der Holzstamm 1 braucht, um zur Meßebene 7 zu gelangen, beginnt der erste Meßvorgang. Die aus einem Mikroprozessorsystem mit Speichereinheit bestehende Auswerte-Einheit 20 aktiviert dabei die Laserdioden-Einheiten 8, 8' mit einer Taktfrequenz von wenigstens 300 Hz. Die Phototransistoren der Empfangsbalken 5, 5' wurden bereits mit dem Einschalten der Einrichtung bzw. des Kettenförderers 2, 2' aktiviert.

Synchron mit der Taktfrequenz werden von den beiden Laserdioden-Einheiten 8, 8' fächerförmige Laserlichtblitze im sichtbaren roten Wellenlängenbereich von etwa 670 nm oder im Infrarotbereich von etwa 950 nm erzeugt, die in der Meßebene 7 liegen und als Lichtstrich auf den Phototransistor-Reihen 6, 6' auftreffen, soferne nicht eine Abdunkelung durch den Holzstamm 1 erfolgt. Der fächerförmige Laserstrahl entsteht durch einen Drei-Linsen-Kollimator, der das aus der Laserdiode kommende Licht fokussiert und in parallele Strahlen umwandelt, welche schließlich in der halbzylinderförmigen Strichoptik aufgefächert werden. Bei den Laserdioden-Einheiten 8, 8' kann es sich um Halbleiterlaser mit einer Ausgangsleistung von etwa 3 mW oder He-Ne-Laser mit rotierendem Prisma zur Laserlichtblitz-Erzeugung handeln. Der Lichtstrich erzeugt in den Phototransistoren der Empfangsbalken 5, 5' relativ starke elektrische Signale, die unverstärkt ausreichen, in bistabilen Kippschaltungen (Flip-flops) weiterverarbeitet zu werden. Jeder Phototransistor ist über einen aus Kondensator und Widerstand bestehenden Siebkreis an eine bistabile Kippstufe angeschlossen, damit Fremd-Gleichlichtanteile unterdrückt und nur auftretende Laserlichtblitze in den bistabilen Kippstufen gespeichert werden.

Von der Auswerte-Einheit 20 werden die gespeicherten Signale gezählt und von der bekannten Gesamtzahl der Phototransistoren eines Empfangsbalkens 5, 5' abgezogen, wobei mit Hilfe einer Logik Abdunkelungen von Phototransistoren, die durch abstehende Teile des Holzstammes 1 verursacht wurden, unterdrückt werden.

Auf Grund der gegebenen Geometrie der optoelektronischen Meßeinrichtung, d.h. feste Abstände zwischen den Phototransistor-Reihen 6, 6' und zugeordneten Laserdioden-Einheiten 8, 8' sowie den beiden Laserdioden-Einheiten 8, 8' und dem rechten Winkel zwischen den beiden Empfangsbalken 5, 5', können bei bekannter Kreisbogenlänge der Phototransistor-Reihen 6, 6' und Lage sowie Zahl der abgedunkelten Phototransistoren sowohl der Durchmesser, als auch die Entfernung des Mittelpunktes des Holzstammes 1 errechnet werden.

Bildet man beispielsweise ein Dreieck zwischen dem Mittelpunkt des Holzstammes 1 und den beiden Laserdioden-Einheiten 8, 8', so errechnen sich die Entfernungen des Mittelpunktes von den beiden Laserdioden-Einheiten 8, 8' unter Anwendung des Sinussatzes nach bekannten Formeln.

Es versteht sich, daß nach bekannten Formeln auch die Winkel, den die Durchmesser des Holzstammes 1 einschließen, bzw. die Durchmesser selbst unter Berücksichtigung der Lage des Holzstammes 1 zu errechnen sind, so daß auf nähere Erläuterungen verzichtet werden kann.

In der Auswerte-Einheit 20 ist ein den benötigten Formeln entsprechender Algorithmus programmiert, welcher die exakte Errechnung der Durchmesser des Holzstammes 1 erlaubt, wobei auch eine Temperaturkompensation vorgesehen ist.

An gut sichtbarer Stelle können am Meßtor 10 und bzw. oder an der Auswerte-Einheit 20 rote und grüne lichtemmitierende Dioden vorgesehen sein, welche einen Taktfrequenzausfall oder das Vorhandensein der Sende-spannung signalisieren.

Die einzelnen Meßvorgänge können von der Auswerte-Einheit 20 so gesteuert sein, daß ein Mittendurchmesser des Holzstammes 1 arithmetisch ermittelt werden kann.

Über die Schnittstelle 22 der Auswerte-Einheit 20 kann ein Prokolliergerät bzw. ein Bildschirm mit Drucker angeschlossen sein, so daß die einzelnen Durchmesser, Mittendurchmesser, Länge und Ident-Nr. des Holzstammes 1 angezeigt und ausgedruckt werden können.

Die Auswerte-Einheit 20 kann auch so ausgerüstet sein, daß der weitere Anschluß von Störungsmeldungen bei Verschmutzungen der optoelektronischen Meßeinrichtung, Überschreitung des Meßbereiches, Ausfall des Kettenförderers 2, 2' oder aber auch übergeordneter Rechner möglich wird.

Durch das stabil ausgeführte Meßtor 10, mit dem die Empfangsbalken 5, 5', Laserdioden-Einheiten 8, 8' und die Lichtschranke 9, 9' fest verbunden sind, wird eine äußerst robuste und zuverlässige Einrichtung zum Erfassen des Durchmessers und bzw. oder Volumens eines Holzstammes 1 erreicht. Die Meßgenauigkeit ergibt sich im wesentlichen aus der Anzahl der Phototransistoren 6, 6' im Empfangsbalken 5, 5'. Bei dem beschriebenen Ausführungsbeispiel enthalten die Empfangsbalken 5, 5' je 512 Phototransistoren 6, 6', durch versetzte Anordnung könnte diese Anzahl jedoch ohne weiteres verdoppelt werden.

## Patentansprüche

1. Einrichtung zum Erfassen der Maße eines gegebenenfalls bewegten Gegenstandes (1) mit einer optoelektronischen Meßeinrichtung, welche in wenigstens einer quer zur Längsachse des Gegenstandes (1) stehenden Meßebene (7) angeordnete Sende- und Empfangs-Elemente (6,6'; 8,8') sowie eine Auswerte-Einheit (20) aufweist, wobei die Meßebene (7) von einem Meßtor (10) mit wenigstens zwei einen vorbestimmten Winkel einschließenden Meßbalken (4,4') begrenzt wird und auf den der Meßebene (7) zugewandten Seitenflächen der Meßbalken (4,4') wenigstens je eine Reihe von Empfangs-Elementen (6,6') angeordnet ist, dadurch gekennzeichnet, daß diesen Reihen nur je ein einziges in der Meßebene (7) in einem festen Abstand (A) vom Meßbalken (4,4') liegendes, periodisch aktivierbares Sende-Element (8,8') für die Aussendung eines fächerförmigen, auf die Empfangs-Elemente (6,6') ausgerichteten Lichtstrahles zugeordnet ist und jede Reihe der Empfangs-Elemente (6,6') etwa einen Kreisbogen bildet, in dessem Mittelpunkt das zugeordnete Sende-Element (8,8') angeordnet ist.

2. Einrichtung nach Anspruch 1, dadurch gekennzeichnet, daß die Sende-Elemente (8,8') aus je einer Laserdioden-Einheit mit Laserdiode, Drei-Linsen-Kollimator, Strichoptik und multiflexibler Treiberelektronik bestehen.

3. Einrichtung nach Anspruch 1 oder 2, dadurch gekennzeichnet, daß die Empfangs-Elemente (6,6') aus Phototransistoren bestehen und in wasserdichten Empfangsbalken (5,5') mit einem im Bereich des fächerförmigen Lichtstrahles durchgehenden, von einem Glas abgedeckten Längsschlitz (50,50') untergebracht sind.

4. Einrichtung nach einem der Ansprüche 1 bis 3, dadurch gekennzeichnet, daß die Reihe der Empfangs-Elemente (6,6') in gleiche Teilstücke (60,60') unterteilt ist, wobei die Empfangs-Elemente (6,6') jedes Teilstückes (60,60') auf einer gleichförmigen Leiterplatte angeordnet sind.

5. Einrichtung nach einem der Ansprüche 1 bis 4, dadurch gekennzeichnet, daß jedes Sende-Element (8,8') in einem wasserdichten Gehäuse mit einem von einem Glas abgedeckten Schlitz (80,80') zum zugeordneten Empfangsbalken (5,5') hin angeordnet ist, wobei das Gehäuse zwischen zwei mit einem Steher (11,11') des Meßtores (10) fest verbundenen, rechteckigen Platten (18,19; 18',19') montiert ist, welche seitlich über das Gehäuse vorstehen.

6. Einrichtung nach einem der Ansprüche 1 bis 5, dadurch gekennzeichnet, daß die beiden Sende-Elemente (8,8') zur Justierung für Dauerlicht aktivierbar sind.

7. Einrichtung nach einem der Ansprüche 1 bis 6, dadurch gekennzeichnet, daß die Auswerte-Einheit (20) aus einem Mikroprozessorsystem mit Speichereinheit besteht,das die Sende- und Empfangs-Elemente (6,6'; 8,8') synchron mit einer Taktfrequenz von mehr als 300 Hz aktiviert.

8. Einrichtung nach einem der Ansprüche 1 bis 7, dadurch gekennzeichnet, daß die Auswerte-Einheit (20) zur Erfassung und Anzeige des Durchmessers und bzw. oder Volumens des Gegenstandes (1) aus den gezählten Signalen von beiden Empfangs-Elemente-Reihen (6,6'), den ermittelten Zahlen der vom Gegenstand (1) abgedunkelten Empfangs-Elemente (6,6') und der konstanten Länge der beiden Empfangs-Elemente-Reihen (6,6') sowie den konstanten Abständen der Empfangs-Elemente-Reihen (6,6') zu ihren zugeordneten Sende-Elementen (8,8') und den beiden Sende-Elementen (8,8') zueinander, unter Erzeugung eines die Distanz zwischen dem Gegenstand (1) und den Sende-Elementen (8,8') berücksichtigenden Lagesignals ausgebildet ist.

9. Einrichtung nach einem der Ansprüche 1 bis 8, dadurch gekennzeichnet, daß die Auswerte-Einheit (20) ausgebildet ist, um durch vom Gegenstand (1) abstehende Teile verursachte Abdunkelungen von Empfangs-Elementen (6,6') zu unterdrükken.

## Claims

1. Device for measuring the dimensions of a possibly moving object (1) by means of an optoelectronic measuring device which has transmitting and receiving elements (6,6'; 8,8'), arranged in at least one measuring plane (7) situated at right angles to the longitudinal axis of the object (1), and an evaluation unit (20), the measuring plane (7) being bounded by a measuring gate (10) having at least two measuring beams (4,4') enclosing a predetermined angle, and at least respectively one row of receiving elements (6, 6') being arranged on the lateral surfaces of the measuring beams (4,4') facing the measuring plane (7), characterized in that these rows are assigned only respectively a single transmitting element (8, 8'), which is situated in the measuring plane (7) at a fixed distance (A) from the measuring beam (4, 4') and can be activated periodically, for transmitting a fan-shaped light ray aligned with the receiving elements (6,6'), and each row of the receiving elements (6, 6') approximately forms a circular arc at the centre of which the assigned transmitting element (8, 8') is arranged.

2. Device according to Claim 1, characterized in that the transmitting elements (8, 8') consist of respectively one laser diode unit having a laser diode, a three-lens collimator, a hairline optics and a multiflexible driver electronics.

3. Device according to Claim 1 or 2, characterized in that the receiving elements (6, 6') consist of phototransistors and are accommodated in watertight receiving beams (5,5') having a longitudinal slot (50, 50') covered by a glass and continuous in the region of the fan-shaped light ray.

4. Device according to one of Claims 1 to 3, characterized in that the row of the receiving elements (6,6') is subdivided into equal segments (60,60'), the receiving elements (6, 6') of each segment (60, 60') being arranged on a uniform printed circuit board.

5. Device according to one of Claims 1 to 4, characterized in that each transmitting element (8,8') is arranged facing the assigned receiving beam (5, 5'), in a watertight housing having a slot (80, 80'), covered by a glass, the housing being mounted between two rectangular plates (18,19; 18', 19') which are firmly connected to an upright (11,11') of the measuring gate (10) and project laterally beyond the housing.

6. Device according to one of Claims 1 to 5, characterized in that the two transmitting elements (8,8') can be activated for adjusting the permanent light.

7. Device according to one of Claims 1 to 6, characterized in that the evaluation unit (20) consists of a microprocessor system which has a storage unit and activates the transmitting and receiving elements (6, 6'; 8, 8') synchronously with a clock frequency of more than 300 Hz.

8. Device according to one of Claims 1 to 7, characterized in that the evaluation unit (20) is designed to measure and display the diameter and/or volume of the object (1) from the counted signals of two receiving element rows (6, 6'), the determined numbers of the receiving elements (6,6') occulted by the object (1) and the constant length of the two receiving element rows (6,6') as well as the constant distances of the receiving element rows (6, 6') transmitting to their assigned relative elements (8,8') and of the two transmitting elements (8,8') relative to one another, while generating a position signal which takes account of the distance between the object (1) and the transmitting elements (8,8').

9. Device according to one of Claims 1 to 8, characterized in that the evaluation unit (20) ist designed to suppress occultations caused by parts projecting from the object (1).

## Revendications

1. Dispositif de saisie des mesures d'un objet (1) éventuellement mobile, comportant un dispositif de mesure optoélectronique qui présente des éléments d'émission et de réception (6, 6'; 8, 8') disposés dans au moins un plan de mesure (7) placé perpendiculairement à l'axe longitudinal de l'objet (1) ainsi qu'une unité de traitement (20), le plan de mesure (7) étant limité par un portique de mesure (10) comprenant au moins deux poutres de mesures (4,4') formant un angle prédéterminé et au moins une rangée d'éléments de réception (6, 6') étant disposés sur les surfaces latérales, orientées vers le plan de mesure (7), de chacune des poutres de mesure (4,4'), caractérisé par le fait qu'à chacune de ces rangées ne correspond qu'un unique élément d'émission (8, 8'), situé dans le plan de mesure (7), à distance fixe (A) de la poutre de mesure (4, 4'), activable périodiquement, pour l'émission d'un faisceau lumineux en forme d'éventail orienté sur les éléments de réception (6, 6') et que chaque rangée des éléments de réception (6,6') forme à peu près un arc de cercle au centre duquel est disposé l'élément d'émission correspondant (8,8').

2. Dispositif selon la revendication 1, caractérisé par le fait que les éléments d'émission (8, 8') sont chacun constitués d'une unité à diodes lasers comportant une diode laser, un collimateur à trois lentilles, une optique graduée et un circuit électronique d'attaque multiflexible.

3. Dispositif selon la revendication 1 ou 2, caractérisé par le fait que les éléments de réception (6,6') sont constitués de phototransistors et sont logés dans une poutre de réception (5, 5') étanche à l'eau et présentant une fente longitudinale (50,50') continue dans la zone du faisceau lumineux en forme d'éventail et recouverte par une vitre.

4. Dispositif selon l'une des revendications 1 à 3, caractérisé par le fait que la rangée des éléments de réception (6,6') se divise en portions identiques (60, 60'), les éléments de réception (6, 6') de chaque portion (60, 60') étant disposés sur une carte à circuit imprimé de forme identique.

5. Dispositif selon l'une des revendications 1 à 4, caractérisé par le fait que chaque éléments d'émission (8,8') est disposé dans un boîtier étanche à l'eau et présentant une fente (80, 80') recouverte par une vitre et orientée vers la poutre de réception correspondante (5, 5'), le boîtier étant monté entre deux plaques rectangulaires (18,19; 18', 19') qui sont solidairement reliées à un montant (11, 11') du portique de mesure (10) et débordent latéralement au-delà du boîtier.

6. Dispositif selon l'une des revendications 1 à 5, caractérisé par le fait que l'on peut activer les deux éléments d'émission (8,8') pour les régler pour une lumière permanente.

7. Dispositif selon l'une des revendications 1 à 6, caractérisé par le fait que l'unité de traitement (20) est constituée d'un système de microprocesseur avec unité de mémoire qui active les éléments d'émission et de réception (6,6'; 8,8') en synchronisme avec une fréquence d'horloge de plus de 300 Hz.

8. Dispositif selon l'une des revendications 1 à 7, caractérisé par le fait que l'unité de traitement (20) est conçue pour la saisie et l'affichage du diamètre et/ou du volume de l'objet (1) à partir des signaux comptés par les deux rangées d'éléments de réception (6, 6'), des nombres, communiqués, d'éléments de réception (6,6') obscurcis par l'objet (1) et de la longueur constante des deux rangées d'éléments de réception (6, 6') ainsi que des distances constantes entre les rangées d'éléments de réception (6,6') et leurs éléments d'émission correspondants (8,8') et des deux éléments d'émission (8,8') entre eux, avec production d'un signal de position tenant compte de la distance entre l'objet (1) et l'élément d'émission (8,8').

9. Dispositif selon l'une des revendications 1 à 8, caractérisé par le fait que l'unité de traitement (20) est conçue pour supprimer des obscurcissements des éléments de réception (6, 6') provoqués par des parties venant en saillie de l'objet (1).
